# EUROPEAN PATENT SPECIFICATION

(11) **EP 0 486 488 B1**
(45) Date of publication and mention of the grant of the patent: **06.07.1994**
(21) Application number: 89909194.6
(22) Date of filing: 09.08.1989
(51) Int. Cl.: B60P 1/46, B60P 1/44

(54) **ELEVATOR**
LIFT
ELEVATEUR

(43) Date of publication of application: 27.05.1992
(73) Proprietor: NILSEN, Rauno, SF-81700 Lieksa (FI)
(72) Inventor: NILSEN, Rauno, SF-81700 Lieksa (FI)
(74) Representative: Siebmanns, Hubertus
(86) International application number: FI8900145
(87) International publication number: WO9101900

(56) References cited:
- DE-A- 2 816 549
- DE-A- 3 132 871

## Description

The invention relates to an elevator according to the preamble of claim.

When using a loading platform, it is transferred to the level of the ground and the goods are loaded onto it or the person to be transported places himself or is transferred to the loading platform and the loading platform is hoisted up to the level of the vehicle floor. Thereafter, it is easy to transfer the goods or people into the vehicle. Elevators are used in different kinds of vehicles, such as e.g. small buses and delivery/goods vans. The present elevators are large and after use they are turned inside the vehicle, where they occupy a lot of space. In addition, they are expensive and complicated. Furthermore, the present elevators can generally be used only in vehicle openings in the backward direction. One of the disadvantages caused by the elevators is the change in the appearance of the vehicle, because the elevators remain visible.

An elevator of the above identified type according to the preamble of the claim has already been described in DE-A-3 132 871. The structure of this previously known elevator is complicated and there are no control elements for steering the movement and turning the loading platform.

It is an object of the invention to provide an elevator, which is suitable for use in both back and side doors, is simple, relatively small, does not in an essential way change the appearance of the vehicle or its interior and is favourable to produce.

In order to achieve these objects, an elevator according to the invention is characterized in that the control elements comprise a pin attached to the upper end of the shaft and grooves formed in the casing, and that the upper end of the shaft is movable inside the casing, whereby the pin is arranged to be moved when transferring the shaft to steer the movement of the shaft and loading platform during the transfer. When the elevator is out of use, the loading platform is underneath the vehicle, protected and invisible. The power, transfer and control equipment, which is inside the vehicle, can be placed inside a closed casing. The casing can be upholstered in a way corresponding to the upholstery of the vehicle. The device is small and the elevator and its operational units do not change the appearance of the vehicle or they do not present a hindrance or disturb the use of the vehicle for any other purpose.

When taking the elevator into use, the elevator is transferred forth by moving the shaft firstly downward and by turning it so, that the loading platform comes forward from a position beneath the vehicle. The goods or people transferred on the loading platform are hoisted up on the level of the floor of the vehicle by transferring the shaft and loading platform upwards. After the loading, the loading platform is transferred back to the position underneath the vehicle by turning the shaft. In different embodiments of the invention, the shaft and the loading platform attached thereto can be transferred in height direction and turned in the most appropriate order and in the way best suitable for the purpose.

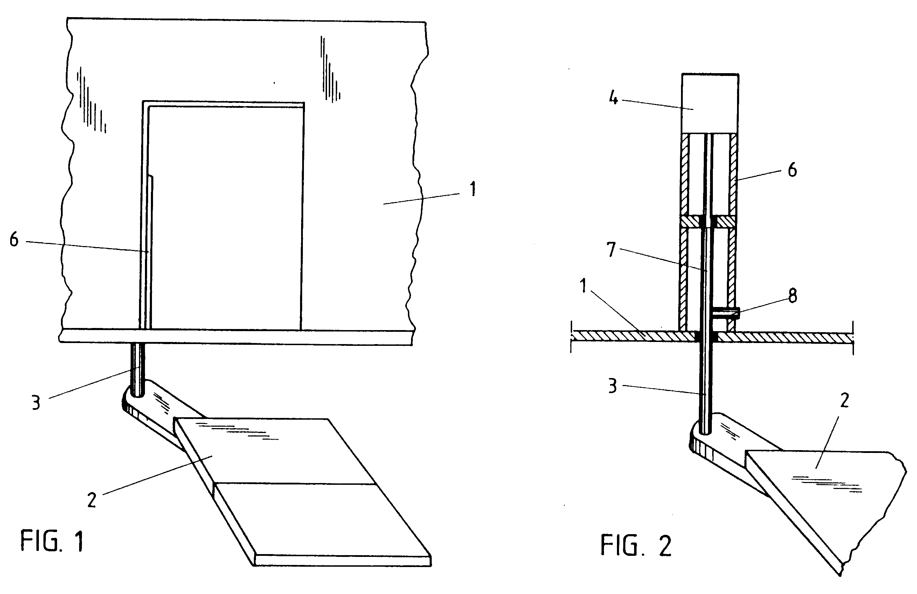

The invention will now be explained in more detail by referring to the attached drawings, in which
Fig. 1 presents one embodiment of the elevator in accordance with the invention attached to the vehicle and seen obliquely from the side,
Fig. 2 presents the elevator in accordance with fig. 1 attached to the vehicle and partly in cross-section, and figures 3-7 present on embodiment of the position of the control elements of the elevator in accordance with the invention seen from one side, and the positions of the loading platform seen from one side and from above, the control element being in different positions.

The embodiments shown in the figures comprise a casing 6, which is attached to a vehicle 1, a shaft 3, which is movably attached inside the casing in regard of it and the vehicle, a loading platform 2, which is attached on one end of the shaft, and a power unit 4 for moving of the shaft. In this embodiment, the loading platform is formed of two parts attached to each other. Said parts can be turned on top of each other supported for instance by hinges or similar. The shaft is an elongated bar, the upper end 7 of which is inside the casing.

Inside the casing above the shaft, there is a hydraulic cylinder acting as the power unit 4, which is arranged to move the shaft in height direction. The control element of the shaft is formed by grooves 5, 5a made in the casing and a pin 8 is attached to the shaft, which pin is arranged to be moved in the grooves. The movement of the shaft in the grooves is steered by a special steering part (not shown in the figures). The elevator comprises also a clamping device for locking the shaft in an optional position. As a clamping device is used a known clamping device, which is suitable for the purpose.

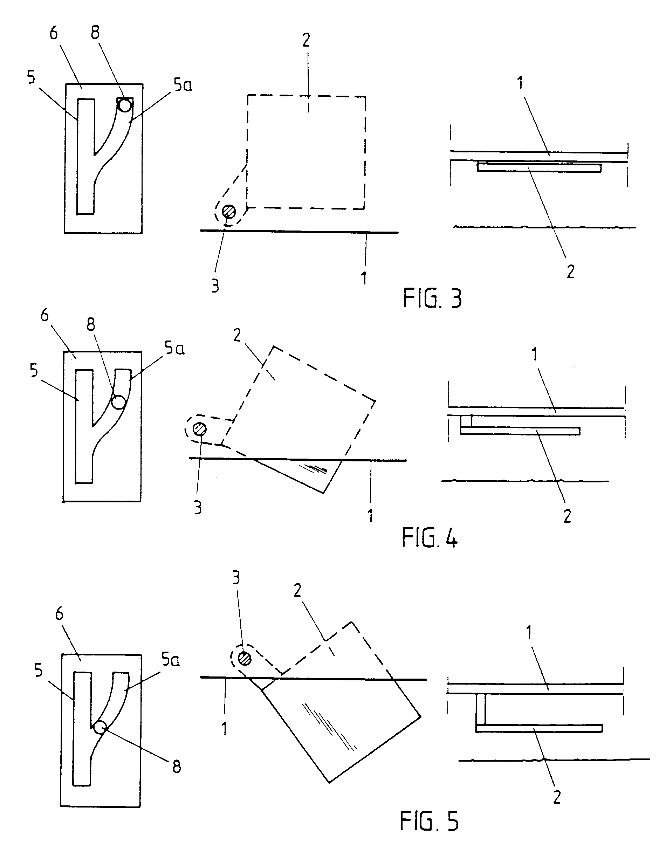

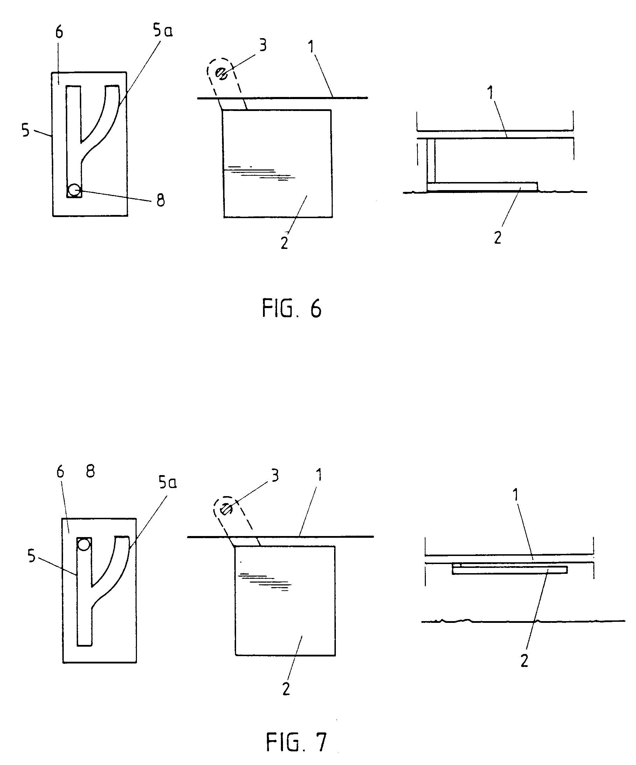

In fig.s 3-7, the loading platform has been presented in different positions and the corresponding positions of the control unit. In fig. 3, the loading platform is turned to a position underneath the vehicle 1. When driving, the loading platform is in this position. The pin 8 is in the groove 5a. When using the elevator, the shaft is moved downwards by means of the hydraulic cylinder, whereat the pin of the shaft is transferred downwards steered by the groove 5a and the shaft and the loading platform attached thereto are turning when moving downwards at the same time steered by the groove firstly in the position shown in figure 4 and then in the position shown in fig. 5. Finally, the loading platform is turning into the position presented in figure 6, whereat the loading platform is mainly entirely outside the adjoining side of the vehicle and has been transferred at the end of its way directly downwards on to the surface of the ground. When loading the vehicle, the loading platform is transferred directly upwards steered by the groove 5 into the position shown in figure 7. After finishing the loading, the loading platform is transferred downwards and lifted upwards steered by groove 5a, whereat the loading platform is turned underneath the vehicle when hoisted up.

The elevator comprises attached thereto different kinds of known signal and warning devices for controlling or following up the operation of the elevator either from the cabin of the vehicle or from the side of the elevator.

## Claims

1. An elevator to be used in vehicles for hoisting up goods and people up to the level of the floor of the vehicle, said elevator comprising:
- a vertical casing (6) attached to the body (1) of the vehicle close to the door opening;
- a shaft (3) attached to the casing (6) and pivotable in relation to the vehicle;
- said shaft (3) also being movable in height direction;
- a power unit (4) for axial movement of the shaft (3);
- a loading platform (2) attached to the lower end of the shaft (3);
- said platform (2) being movable in relation to the vehicle by means of the shaft (3);
- control elements (5, 5a, 8) for steering the movement of the shaft (3) placed near the casing;
- whereby the shaft (3) is extended underneath the vehicle floor;
- and where the loading platform (2) is attached to the lower part of the shaft (3), which part extends under the vehicle floor, and which is arranged to be underneath the vehicle during storage;
- and which can be turned to the outside of the vehicle and be transferred in height direction of the vehicle during use;
**characterized in that**
said control elements (5, 5a, 8) comprise
- a pin (8) attached to the upper end (7) of the shaft and grooves (5, 5a) formed in the casing (6);
- the upper end of the shaft (3) is movable inside the casing (6);
- whereby the pin (8) is arranged to be moved when transferring the shaft (3) to steer the movement of the shaft (3) and the loading platform (2) during the transfer.

## Patentansprüche

1. Lift zur Anwendung an Fahrzeugen zum Hochheben von Gütern und Personen bis zum Höhenniveau des Fahrzeugbodens, welcher Lift umfasst:
- ein vertikales Gehäuse (6), welches am Chassi (1) des Fahrzeuges in der Nähe der Türöffnung befestigt ist;
- eine am Gehäuse (6) und im Verhältnis zum Fahrzeug schwenkbare Welle (3);
- genannte Welle (3) ist auch in Höhenrichtung beweglich;
- eine Krafteinheit (4) zur axialen Bewegung der Welle (3);
- eine am unteren Ende der Welle (3) befestigte Ladebühne (2);
- genannte Bühne (2) ist mittels der Welle (3) im Verhältnis zum Fahrzeug beweglich;
- Regelorgane (5, 5a, 8) zum Steuern der Bewegung der Welle (3) und nahe dem Gehäuse angeordnet;
- wobei die Welle (3) bis unter den Fahrzeugboden verlängert ist;
- und wobei die Ladebühne (2) am unteren Teil der Welle (3) befestigt ist, welcher Teil sich unter den Fahrzeugboden erstreckt, und welcher unter dem Fahrzeug lagerbar vorgesehen ist;
- und welcher zur Aussenseite des Fahrzeuges schwenkbar und während der Anwendung in Höhenrichtung des Fahrzeuges überführbar ist;
**dadurch gekennzeichnet**, **dass**
genannte Regelorgane (5, 5a, 8) umfassen
- einen Zapfen (8), welcher am oberen Ende (7) der Welle befestigt ist, sowie Nuten (5, 5a) im Gehäuse (6);
- das obere Ende der Welle (3) ist innerhalb des Gehäuses (6) beweglich;
- wobei der Zapfen (8) zum Bewegen vorgesehen ist bei Überführen der Welle (3) zum Führen der Bewegung der Welle (3) und der Ladebühne (2) während der Überführung.

## Revendications

1. Elévateur destiné à être utilisé dans des véhicules pour lever des marchandises ou hommes jusqu'au niveau du plancher du véhicule, ledit élévateur comprenant un boîtier (6) vertical fixé au corps (1) du véhicule près du jour de porte, une tige (3) fixée au boîtier et pouvant pivoter par rapport au véhicule, ladite tige (3) étant également mobile en direction de la hauteur, une unité de puissance (4) pour le déplacement axial de la tige (3), une plate-forme de chargement (2) fixée à l'extrémité inférieure de la tige (3), ladite plate-forme (2) étant mobile par rapport au véhicule au moyen de ladite tige (3), des éléments de commande (5,5a,8) placés près du boîtier pour commander le mouvement de la tige (3), ceci permettant que la tige (3) s'étende sous le plancher du véhicule, et dans lequel la plate-forme de chargement (2) est fixée à la partie inférieure de la tige (3), qui s'étend sous le véhicule, et est disposée pour se trouver sous le véhicule pendant le rangement, point être tournée vers l'extérieur du véhicule et être déplacée en direction de la hauteur du véhicule pendant son utilisation, caractérisé en ce que lesdits éléments de commande (5,5a,8) comprennent une cheville (8) fixée à l'extrémité supérieure de la tige et des rainures (5,5a) formées dans le boîtier, l'extrémité supérieure de la tige (3) étant mobile à l'intérieur du boîtier (6), de sorte que la cheville (8) est disposée pour être déplacée, quand la tige (3) est transférée, pour commander le mouvement de la tige (3) et de la plate-forme de chargement (2) pendant le transfert.
